# EUROPÄISCHE PATENTSCHRIFT

(11) **EP 1 242 772 B1**
(45) Veröffentlichungstag und Bekanntmachung des Hinweises auf die Patenterteilung: **09.06.2004**
(21) Anmeldenummer: 00993736.8
(22) Anmeldetag: 23.12.2000
(51) Int. Cl.: F25B 21/00, H01J 45/00

(54) **KÜHLVORRICHTUNG**
COOLING DEVICE
DISPOSITIF DE REFROIDISSEMENT

(30) Priorität: 29.12.1999 DE 19963571
(43) Veröffentlichungstag der Anmeldung: 25.09.2002
(73) Patentinhaber: Pfannenberg GmbH, 21035 Hamburg (DE)
(72) Erfinder: SUTHOFF, Burkhard, 48431 Rheine (DE)
(74) Vertreter: Richter, Joachim, Dipl.-Ing.
(86) Internationale Anmeldenummer: PCT/EP2000/013267
(87) Internationale Veröffentlichungsnummer: WO 2001/050074

(56) Entgegenhaltungen:
- EP-A- 0 404 093
- DE-A- 2 550 966
- DE-A- 3 730 830
- US-A- 3 254 244
- US-A- 5 312 514
- US-A- 5 675 972
- "Boiling fridges" NEW SCIENTIST PLANET SCIENCE, [Online] 24. Januar 1998 (1998-01-24), XP002165907 Gefunden im Internet: <URL:http://www.newscientist.com/ns/980124 /features1.html> [gefunden am 2001-04-24]

## Beschreibung

Die vorliegende Erfindung betrifft eine Kühlvorrichtung, ein Verfahren zur Kühlung eines Gegenstandes sowie ein Kühlsystem, welches insbesondere für Schaltschränke geeignet ist.

Unter Wärme versteht man eine Energie, die in Form von unregelmäßigen atomaren beziehungsweise molekularen Bewegungen vorliegt. Da aufgrund des zweiten Hauptsatzes der Thermodynamik die Entropie (Unordnung) eines Systems nur zunehmen oder gleich bleiben kann, findet bei allen praktischen Umwandlungen einer Energieart in eine andere Energieart eine Erzeugung von Wärme statt, wobei diese Wärmeenergie der umgewandelten Nutzenergie verloren geht. Man ist daher bemüht, diese "Abwärme" möglichst gering zu halten beziehungsweise überhaupt nicht erst auftreten zu lassen. Solchen Bestrebungen zur Vermeidung von Abwärme sind allerdings aufgrund der physikalischen beziehungsweise thermodynamischen Gesetzmäßigkeiten theoretische Grenzen gesetzt, welche nicht überschritten werden können. Es ist daher unvermeidlich, dass bei vielen praktischen Vorgängen Abwärme anfällt, welche möglichst effizient abzuführen ist, um das Funktionieren des entsprechenden Systems zu gewährleisten.

Ein wichtiges Beispiel für Abwärme erzeugende Prozesse sind elektrische Vorgänge, wie sie in elektrotechnischen Anlagen, Schaltschränken, elektrischen Schaltungen oder mikroelektronischen Bausteinen auftreten. Im Inneren eines solchen Systems wird infolge von Reibungsvorgängen der Elektronen, die die elektrische Leitung tragen, eine zum Widerstand R und dem Quadrat des elektrischen Stromes I² proportionale Verlustleistung erzeugt, welche in Form von Abwärme auftritt. Die Abwärme schlägt sich dabei wie eingangs erläutert in einer Erhöhung der kinetischen Energie der Atome und Moleküle beziehungsweise in einer Erhöhung ihrer Schwingungsamplitude im Festkörpergitter nieder.

Für die Kühlung von Gegenständen sind verschiedene Verfahren bekannt, welche grundsätzlich auf dem Prinzip beruhen, dass ein kühlerer Gegenstand (Wärmesenke) mit einem wärmeren Gegenstand (Wärmequelle) derart in Verbindung gebracht wird, dass aufgrund des thermodynamischen Bestrebens, einen Gleichgewichtszustand anzunehmen, Wärmeenergie von der Wärmequelle zur Wärmesenke überfließt. Die Übertragung der Wärmeenergie kann dabei zum einen durch Wärmeleitung stattfinden, bei welcher auf mikroskopischem Niveau die Bewegungsenergie der Atome beziehungsweise Moleküle durch Stoßprozesse von einem Teilchen auf das nächste übertragen wird. Die Rate, mit welcher durch Wärmeleitung Wärmeenergie übertragen wird, ist proportional zur an der Wärmeübertragung beteiligten Kontaktfläche, zu einer materialspezifischen Wärmeleitfähigkeit λ sowie zum Temperaturgradienten (Temperaturdifferenz pro Abstand) zwischen der Wärmequelle und der Wärmesenke.

Ein weiterer Mechanismus zum Transport von Abwärme ist die Konvektion. Hierbei wird die Abwärme zunächst auf ein bewegliches Medium wie zum Beispiel eine Kühlflüssigkeit oder ein Gas übertragen, und sodann mit der Materie dieses Kühlmediums abtransportiert. Die Geschwindigkeit dieses Abtransportes wird durch die Bewegungsgeschwindigkeit des Kühlmediums bestimmt und kann somit verhältnismäßig hohe Werte erreichen.

Schließlich besteht in der Abstrahlung von Wärmeenergie in Form von elektromagnetischer Wärmestrahlung ein weiterer Mechanismus zur Abgabe von Abwärme. Die Transportgeschwindigkeit der Wärmeenergie ist hierbei die Lichtgeschwindigkeit, wobei die Rate der Wärmeabgabe gemäß dem Stefan-Bolzmann'schen-Gesetz proportional zur abstrahlenden Oberfläche sowie der vierten Potenz der Temperaturdifferenz ist. Das heißt, dass vornehmlich bei hohen Temperaturdifferenzen zwischen Wärmequelle und Wärmesenke eine hohe Rate der Wärmeabgabe durch Abstrahlung erzielt werden kann.

Bei der Abführung von Abwärme, wie sie z.B. bei elektronischen Bauelementen in Schaltschränken auftritt, kommt es darauf an, die Abwärme schnell und sicher vom Entstehungsort weg zu leiten. Andernfalls kann es nämlich zu einer Überhitzung und damit zu einer Zerstörung elektronischer Bauteile kommen. Daher werden zum Beispiel Lüftungen eingesetzt, bei denen ein starker Ventilator Kühlungsluft an der Oberfläche der Bauteile entlang bläst und somit für eine schnelle Ableitung der Wärme über Konvektion sorgt. Darüber hinaus ist es bekannt, auf zu kühlenden Bauteilen wie zum Beispiel Mikroprozessoren großflächige Kühlkörper aus Metall anzubringen, welche für eine schnelle Weiterleitung der Verlustwärme vom Entstehungsort und deren Übergabe an die Konvektionskühlung sorgen sollen. Nachteilig bei den genannten Lösungen ist, dass sie einen erheblichen konstruktiven Aufwand mit mechanisch bewegten Teilen erfordem, die einem hohen Verschleiß unterliegen. Femer lässt der Wirkungsgrad derartiger Vorrichtungen häufig zu wünschen übrig, und die Kühlsysteme sind mit dem Einsatz umweltgefährdender Stoffe verbunden.

In der Druckschrift US-A-5,675,972 wird ein Verfahren und eine Vorrichtung zum Pumpen von Wärme in Form einer Vakuumdiode beschrieben, bei der auf der Seite, auf der die Wärme entzogen werden soll, eine Elektronen emittierende Kathodenschicht angeordnet ist, und die emittierten Elektronen an einer gegenüberliegenden, auf entsprechendem Potential liegenden Anode eingesammelt werden. Spezielle Vorkehrungen zur Steuerung der Leistung der Wärmepumpe sind nicht vorgesehen. In der Druckschrift US-A-3,254,244 ist eine thermionische Energieumwandlungs-Triode offenbart, die nach ähnlichen Prinzipien arbeitet, aber nicht speziell zur Abfuhr von Wärme bzw. zur Kühlung ausgelegt ist. Neben einer Beschleunigungselektrode ist dabei eine Sammelelektrode vorgesehen, die auch die Form eines Gitters annehmen kann (Fig. 2). In der Druckschrift US-A-5,312,514 sind verschiedene Verfahren zur Herstellung von in der Emissionsoberfläche strukturierten Feldemissionsvorrichtungen beschrieben, die vor allem für den Einsatz bei Flachdisplays vorgesehen sind. Die DE-A1-25 50 966 schließlich beschreibt ein Verfahren zum Abschneiden von III-V-Verbindungen auf Substraten, das zur Herstellung von Elektronenemittem mit reduzierter Austrittsarbeit eingesetzt werden kann.

Aufgabe der vorliegenden Erfindung war es, eine neuartige Kühlvorrichtung zur Verfügung zu stellen, welche umweltfreundlich, kostengünstig, verschleißarm, möglichst wartungsfrei und konstruktiv einfach sein soll. Femer soll die Kühlvorrichtung einen hohen Wirkungsgrad bei einer Kühlleistung bis zu tiefen Temperaturen, vorzugsweise bis -80° C, gewährleisten sowie an verschiedene technische Rahmenbedingungen anpassbar sein. Weiterhin soll die Kühlvorrichtung möglichst auch autonom mit Batterien oder Akkumulatoren betrieben werden können.

Diese Aufgabe wird durch eine Kühlvorrichtung mit den Merkmalen des Anspruchs 1 gelöst.

Bei der erfindungsgemäßen Kühlvorrichtung ist zwischen der Elektronen-Emissionsschicht und der Saugelektrode mindestens ein Gitter angeordnet, welches mit einer vorzugsweise regelbaren Spannungsquelle verbunden ist.

Die Kühlvorrichtung transportiert die abzuführende Abwärme mit Hilfe von Elektronen. Normalerweise sind Elektronen innerhalb eines Festkörpers durch chemische Bindungen bei bestimmten Atomen beziehungsweise Molekülen gebunden. Bei vielen Festkörpern wie insbesondere den Metallen entstehen jedoch aufgrund quantenmechanischer Niveau-überlagerungen (energetische) Leitungsbänder, in denen sich die Valenzelektronen frei innerhalb des Festkörpers bewegen können. Derartige Valenzelektronen transportieren mit ihrer Bewegungsenergie auch Wärmeenergie und sind darüber hinaus, wenn eine elektrische Spannungsquelle an den Festkörper angeschlossen wird, die Träger des elektrischen Stromflusses. Der Bewegungsraum der Valenzelektronen ist im wesentlichen auf das Innere des Festkörpers eingeschränkt. Im Festkörper befinden sich die Elektronen in einem so genannten Potenzialtopf, den sie nur verlassen können, wenn sie eine entsprechend hohe Bewegungsenergie mitbringen, welche ihnen die Überwindung der Potenzialstufe an der Oberfläche des Festkörpers erlaubt. Die für die Elektronen des obersten Valenzbandes eines Festkörpers notwendige Energie zum Verlassen des Festkörpers wird als Aktivierungsenergie bezeichnet und stellt eine Materialkonstante dar. Da aufgrund der statistischen Verteilung der Wärmeenergie in einem Festkörper immer einige Elektronen eine sehr hohe Energie haben, die über der Aktivierungsenergie liegt, können immer einige Elektronen den Festkörper verlassen. Das heißt, dass ein derartiger Festkörper von einer "Elektronenwolke" in unmittelbarer Nähe der Oberfläche umgeben ist. Die quantitative Beschreibung des Flusses der frei werdenden Elektronen erfolgt durch die so genannte Richardsonsche Gleichung. Bei Temperaturen um 20° C legen die frei gewordenen Elektronen Wege typischerweise mit einer Geschwindigkeit von ca. 3500 m/s zurück.

Die vorliegende Erfindung nutzt nun diesen Effekt der frei werdenden Elektronen zur Ableitung von Abwärme aus. Um dieses Ziel zu erreichen, wird die Elektronen-Emissionsschicht vorgesehen, welche mit dem zu kühlenden Gegenstand zu verbinden ist. Gegebenenfalls kann die Elektronen-Emissionsschicht auch als Teil des zu kühlenden Gegenstandes selbst ausgebildet werden. Die Elektronen-Emissionsschicht nimmt zunächst - zum Beispiel über Wärmeleitung - Abwärme aus dem zu kühlenden Gegenstand auf. Diese Wärmeenergie wird unter anderem in den Valenzelektronen der Elektronen-Emissionsschicht gespeichert. Hierdurch steigt der Anteil an Elektronen hoher Energie, welche die Aktivierungsenergie überwinden und die Elektronen-Emissionsschicht somit verlassen können. Die austretenden Elektronen nehmen dabei die ihnen eigene kinetische Energie aus der Elektronen-Emissionsschicht mit. Sie entziehen mit anderen Worten dieser Schicht Wärmeenergie. Ohne weitere Maßnahmen würde es jedoch schnell zu einem Gleichgewichtszustand zwischen Elektronenwolke und Elektronen-Emissionsschicht kommen, das heißt, dass pro Zeiteinheit genau so viele Elektronen aus der Elektronen-Emissionsschicht austreten würden, wie Elektronen aus der Elektronenwolke zurück in die Elektronen-Emissionsschicht eintreten. Eine Netto-Abfuhr von Wärmeenergie könnte somit nicht stattfinden. Um dieses Gleichgewicht auszusetzen und um für eine ständigen Abfuhr von Wärmeenergie aus der Elektronen-Emissionsschicht zu sorgen, ist erfindungsgemäß die Saugelektrode im Abstand zur Elektronen-Emissionsschicht vorgesehen. Durch das Anlegen einer Spannungsquelle zwischen Saugelektrode (Anode) und Elektronen-Emissionsschicht (Kathode) wird ein Potenzialgefälle zwischen beiden Elektroden hergestellt, welches die ausgetretenen Elektronen zur Saugelektrode zieht. Dort werden die Elektronen dann in das Festkörpermaterial der Saugelektrode übernommen und zur Spannungsquelle geleitet. Die Elektronen werden somit ständig aus der Elektronenwolke um die Elektronen-Emissionsschicht entfernt, sodass dort effektiv ein Abfluss energiereicher Elektronen aus der Elektronen-Emissionsschicht erfolgt. Wie bereits oben erläutert, bewegen sich dabei die Elektronen mit einer sehr hohen Geschwindigkeit von typischerweise 3500 m/s, so dass ein extrem schneller Wärmetransport von der Elektronen-Emissionsschicht, die gemäß der Polung der Spannungsquelle als Kathode geschaltet ist, zur Absaugelektrode, die als Anode geschaltet ist, stattfindet.

Die Vorteile der erfindungsgemäßen Kühlvorrichtung liegen in einem effizienten und schnellen Transport von Abwärme. Dieser Transport findet ohne aufwendige konstruktive Maßnahmen und ohne den Einsatz beweglicher mechanischer Teile statt, so dass auch quasi kein Verschleiß an der Kühteinheit stattfinden kann, und dass die Vorrichtung auf lange Zeit, typischerweise zehn Jahre, wartungsfrei betrieben werden kann. Ein weiterer Vorteil der erfindungsgemäßen Kühlung ist, dass sie völlig geräuschlos arbeitet und quasi keinen zusätzlichen Platzbedarf für Kühlelemente aufweist.

Bei der Erfindung wird zwischen Elektronen-Emissionsschicht und Saugelektrode ein Gitter angeordnet, welches mit einer vorzugsweise regelbaren Spannungsquelle verbunden ist. Durch ein derartiges Gitter kann der Potenzialverlauf auf dem Weg zwischen der Elektronen-Emissionselektrode und der Saugelektrode verändert und nach Belieben eingestellt werden, wodurch sich der Strom der energiereichen Elektronen von der Elektronen-Emissionsschicht zur Saugelektrode regeln lässt. Zu diesem Zweck wird an dem Gitter eine gegenüber der Elektronen-Emissionsschicht negative Spannung angelegt, welche abstoßend auf die Elektronen der Elektronenwolke um die Elektronen-Emissionsschicht wirkt. Das Gitter steuert somit den Potenzialverlauf auf dem Weg zwischen der Elektronen-Emissionsschicht und der Saugelektrode. Der Elektrodenstrom wird mit Hilfe der Coulombschen Kräfte gesteuert, um eine Wasserbildung innerhalb des Kühlraumes zu unterdrükken. Des weiteren ist dadurch die Möglichkeit gegeben, die Kühlleistung entsprechend den technischen Notwendigkeiten variabel zu gestalten. Anstelle eines Gitters kann auch ein Mehrfachgitter eingesetzt werden, wodurch die Steuerung verbessert wird. Das Gitter verhindert somit den Durchgriff der positiven Spannung der Saugelektrode (Anode) in einem Ausmaß, welches sich durch die negative Spannung an dem Gitter regeln lässt. Eine elektrische Leistungsaufnahme des Gitters selbst findet dabei nicht statt. Auf diese Weise kann die Kühlleistung der Kühlvorrichtung genau dem jeweiligen Bedarf angepasst werden. insbesondere kann verhindert werden, dass zu Beginn eines Kühlprozesses eine zu hohe Kühlleistung auftritt, welche zu einer Vereisung des zu kühlenden Gegenstandes beziehungsweise der Elektronen-Emissionsschicht führen könnte.

Nach einer erfindungsgemäßen Ausgestaltung kann die Oberfläche der Elektronen-Emissionsschicht ein Erdalkalimetall, vorzugsweise Cäsium (Cs) oder Barium (Ba), oder Elektride oder Mischungen hiervon enthalten beziehungsweise ganz aus diesen Substanzen bestehen. Bei Erdalkalimetallen ist die Aktivierungsenergie vergleichsweise gering, sodass bereits wenige Elektronenvolt (eV) genügen, um Elektronen für einen Wärmetransport freizusetzen. Elektride sind spezielle Salze, die eine sehr lockere Bindung der Valenzelektronen aufweisen, was wiederum zu einer leichten Verfügbarkeit wärmetransportierender Elektronen beiträgt.

Weiterhin können die genannten Stoffe vorzugsweise auf einer Schicht, welche Wolfram (W) enthält oder hieraus besteht, angeordnet sein. Eine Kombination von Erdalkalimetallen mit Wolfram oder vergleichbaren Elementen führt zu einer weiteren Herabsetzung der Aktivierungsenergie und damit zu einem leichteren Austritt der für den Wärmetransport notwendigen Elektronen.

Nach einer anderen Weiterbildung der Erfindung weist die Oberfläche der Elektronen-Emissionsschicht eine Oberflächenprofilierung, z. B. eine dreidimensionale Struktur auf, welche vorzugsweise durch die Ausbildung von Vertiefungen (Furchen, Rillen, Gräben) entsteht. Denkbar ist jedoch auch jede andere Gestaltung der Oberflächenstruktur, welche dem Ziel dient, die Größe der Grenzfläche zwischen der Elektronen-Emissionsschicht und Umgebung zu erhöhen, wodurch sich entsprechend die Rate der austretenden Elektronen erhöht. In gleicher Weise, wie die Elektronen-Emissionsschicht mit einer Oberflächenprofilierung versehen ist, kann die Oberfläche der Saugelektrode an ihrer der Elektronen-Emissionsschicht zugekehrten Seite mit einer Profilierung versehen sein.

Bevorzugterweise wird zwischen der Elektronen-Emissionsschicht und der Saugelektrode ein Vakuum erzeugt. Dieses Vakuum stellt sicher, dass die freie Weglänge der Elektronen hinreichend groß ist, so dass sie ohne Kollisionen mit Gasatomen oder Gasmolekülen von der Elektronen-Emissionsschicht zu der Saugelektrode fliegen können. Ein derartiges Vakuum trägt somit erheblich zur Steigerung der Wärmeübertragungsgeschwindigkeit und -effizienz bei.

Nach einer anderen Weiterbildung der erfindungsgemäßen Kühlvorrichtung enthält diese eine Einrichtung zur Erzeugung eines Magnetfeldes im Bereich der Oberfläche der Elektronen-Emissionsschicht. Ein derartiges Magnetfeld wirkt sich positiv und lenkend auf die Bewegung der Elektronen aus, welche die Wärmeübertragung bewirken. Aufgrund der Lorentz-Kraft bewegen sich Elektronen in einem Magnetfeld auf Kreis- beziehungsweise Spiralbahnen um die magnetischen Feldlinien herum. Bei einem vorzugsweise senkrecht zur Oberfläche der Elektronen-Emissionsschicht gerichteten Magnetfeld bewirkt dieses Magnetfeld somit, dass tangential zur Oberfläche gerichtete Bewegungskomponenten der Elektronen in kreisförmige Bahnbewegungen umgelenkt werden. Bewegungen der Elektronen senkrecht zur Oberfläche der Elektronen-Emissionsschicht (das heißt in Richtung des Magnetfeldes) werden dagegen vom Magnetfeld nicht beeinflusst. Auf diese Weise werden die aus der Elektronen-Emissionsschicht ausgetretenen Elektronen quasi über der Oberfläche gefangen gehalten, ohne dass jedoch ihre Bewegung senkrecht zur Oberfläche und damit zur Saugelektrode hin beeinträchtigt würde. Ferner lassen sich mit Hilfe der Magnetfelder die Austrittsenergien von Elementen wie zum Beispiel Barium um einige Elektronenvolt reduzieren, so dass Austrittsenergien von weniger als 1,0 eV erzielt werden können.

Nach einer anderen Weiterentwicklung der Erfindung, enthält die Elektronen-Emissionsschicht radioaktive Elemente, die einen ß-Zerfall erleiden (β-Strahler). Durch den β-Zerfall werden spontan Elektronen freigesetzt, so dass in der Elektronen-Emissionsschicht auch dann Elektronen für den Wärmetransport zur Verfügung stehen, wenn aufgrund tiefer Temperaturen nicht ausreichend viele thermisch aktivierte Elektronen vorhanden sind. Hiermit lässt sich auch beim Ausfall der Beschleunigungsspannung an der Saugelektrode eine Sicherheitskühlung verwirklichen.

Die Elektronen-Emissionsschicht kann auch als Dünnschichtfolie auf einem hochleitenden Material, vorzugsweise auf Gold, ausgebildet sein. Ein derartiges elektrisch und thermisch leitfähiges Material sorgt für einen guten Transport der Abwärme innerhalb der Elektronen-Emissionsschicht.

Schließlich kann in einer Weiterentwicklung der Saugelektrode letztere Vorsprünge wie z. B. Kanten aufweisen, die einen Elektronenaustritt aus der heißen Elektronen-Emissionsschicht ermöglichen und den kürzesten Weg von der Kathode zur Anode bereitstellen.

Die Erfindung betrifft weiterhin ein Verfahren zur Kühlung eines Gegenstandes, wobei auf dem Gegenstand eine Elektronen-Emissionsschicht und mit Abstand zur Elektronen-Emmissionsschicht eine Saugelektrode angeordnet wird, und wobei die Elektronen-Emissionsschicht gegenüber der Saugelektrode auf ein negatives elektrisches Potenzial gelegt wird, das darin besteht, dass zwischen der Elektronen-Emissionsschicht und der Saugelektrode ein Gitter angeordnet wird und dass der Fluss der Elektroden von der Elektronen-Emissionsschicht zur Saugelektrode durch ein an das Gitter angelegtes elektrisches Potenzial kontrolliert wird. D. h., dass die Elektronen-Emissionsschicht als Kathode und die Saugelektrode als Anode betrieben wird. Durch das erfindungsgemäße Verfahren kann in der oben im Zusammenhang mit der Kühlvorrichtung erläuterten Weise eine Kühlung stattfinden, bei der Elektronen thermische Energie aus der Elektronen-Emissionsschicht zur Saugelektrode transportieren. Dabei machen sich die Oberflächeneigenschaften an der Elektronen-Emissionsschicht positiv bemerkbar. Da nämlich an der Oberfläche die "heißen" Elektronen sich besonders häufig aufhalten und die Bindungsstärke an der Oberfläche gegenüber dem Inneren des Festkörpers reduziert ist, liegt es sehr nahe, dass diese Elektronen die Oberfläche verlassen und sich zur Saugelektrode bewegen. Beim Verlassen des Festkörpers nehmen die Elektronen ihre Bewegungsenergie als individuelle Wärmeenergie mit. Dies führt zu einer Temperaturerniedrigung der Elektronen-Emissionsschicht. Die von den Elektronen transportierte Energie gelangt zur Anode, die sich langsam aufheizt. Es ist daher in der Regel erforderlich, die Anode (Saugelektrode) mit anderen Verfahren, die konventioneller Art sein können, zu kühlen. Wichtig ist dabei jedoch, dass ein schneller und effizienter Abtransport von Wärme von den kritischen Bauteilen wie zum Beispiel Mikroprozessoren oder elektronischen Schaltungen stattgefunden hat, so dass die Wärme dann unter weniger kritischen Bedingungen von der Saugelektrode weiter verteilt und abgeführt werden kann. Die Saugelektrode kann insbesondere über einen separaten Peltier-Effekt oder einen thermoakustischen Effekt gekühlt werden.

Der Fluss der Elektronen wird dabei von der Elektronen-Emissionsschicht zu der Saugelektrode durch ein elektrisches Potenzial kontrolliert, welches an ein zwischen der Elektronen-Emissionsschicht und der Saugelektrode angeordnetes Gitter angelegt ist. Durch ein derartiges elektrisches Potenzial kann die Intensität des Elektronenstromes von der Elektronen-Emissionsschicht zu der Saugelektrode leistungslos gesteuert werden. Damit erhält man einen weiteren Freiheitsgrad, welcher für eine manuelle oder automatische situationsbedingte Steuerung ausgenutzt werden kann.

Die Erfindung betrifft weiterhin ein Kühlsystem, welches eine Sekundärkühlung enthält, die insbesondere in Form einer Konvektionskühlung (zum Beispiel durch Luft oder Wasser) verwirklicht sein kann. Das Kühlsystem ist dadurch gekennzeichnet, dass es eine an dem zu kühlenden Gegenstand anzubringende Kühlvorrichtung der oben erläuterten Art enthält, deren Saugelektrode von der Sekundärkühlung gekühlt wird. Ein derartiges Kühlsystem ist beispielsweise in Schaltschränken elektrischer Bauteile einsetzbar, in welchen aufgrund elektrischer Ströme ein hoher Anfall von Verlustwärme stattfindet, welche zum Schutz der Bauteile möglichst schnell vom Entstehungsort abzuleiten ist. Das Kühlsystem kann jedoch auch vorteilhaft bei vielen anderen Wärmeproduzenten eingesetzt werden, so zum Beispiel bei Lichterzeugern.

Weitere vorteilhafte Ausgestaltungen der Erfindung sind in weiteren Ansprüchen gekennzeichnet.

Im Folgenden wird die Erfindung mit Hilfe der Figuren beispielhaft erläutert. Es zeigen:
- Fig. 1: eine schematische Darstellung zum Funktionsprinzip der Erfindung;
- Fig. 2: ein erfindungsgemäßes Kühlsystem;
- Fig. 3: einen speziellen Schichtaufbau des Kühlsystems;
- Fig. 4: den Kühlstrom einer Kühlvorrichtung mit Ba auf W in Abhängigkeit von der Verlusttemperatur;
- Fig. 5: den Kühlstrom einer Kühlvorrichtung mit Cs auf W in Abhängigkeit von der Verlusttemperatur;
- Fig. 6: die Abstrahlenergie von Elektronenströmen kathodenseitig in Abhängigkeit von der Temperaturdifferenz; und
- Fig. 7: eine schematische Darstellung der Oberfläche einer Elektronen-Emissionsschicht mit einer Oberflächenprofilierung und
- Fig. 8: eine Seitenansicht einer Saugelektrode und der ElektronenEmissionsschicht mit sich gegenüberliegenden Oberflächenprofilierungen.

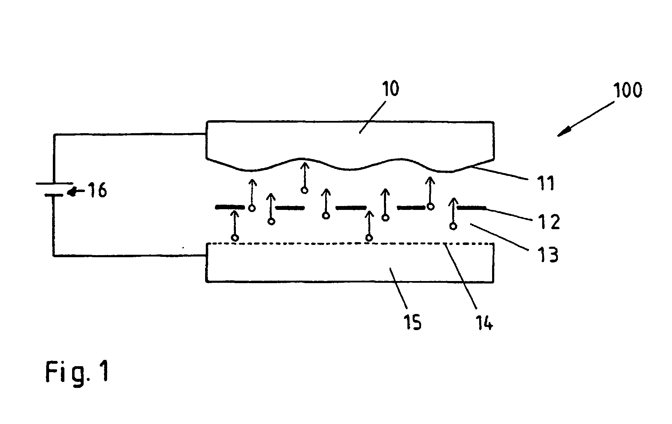

Fig. 1 zeigt schematisch das Funktionsprinzip der erfindungsgemäßen Kühlvorrichtung 100. An einem zu kühlenden Gegenstand (nicht dargestellt) anfallende Abwärme wird von der Elektronen-Emissionsschicht 15 absorbiert. Die Wärmeenergie wird dabei insbesondere von den Elektronen des Materials aufgenommen, wodurch einige Elektronen eine ausreichend hohe Energie bekommen, um die Oberfläche der Elektronen-Emissionsschicht 15 zu verlassen. Diese Elektronen umgeben die Oberfläche der Elektronen-Emissionsschicht 15 als eine Ladungswolke. Erfindungsgemäß wird nun im Abstand zur Oberfläche der Elektronen-Emissionsschicht 15 eine Saugelektrode 10 angeordnet und über eine Spannungsquelle, zum Beispiel eine Batterie 16, wird an die Elektronen-Emissionsschicht 15 ein negatives Potenzial (Kathode) und an die Saugelektrode 10 ein positives Potenzial (Anode) gelegt. Durch diese Potenzialdifferenz werden Elektronen 13 aus der Ladungswolke um die Elektronen-Emissionsschicht 15 herum zur Saugelektrode 10 hin abgesaugt. Die Elektronen nehmen dabei jedes Mal über ihre kinetische und potenzielle Energie einen Teil der Wärmeenergie der Elektronen-Emissionsschicht zur Saugelektrode 10 hin mit. Über Sekundärkühlmaßnahmen (nicht dargestellt) wird diese Wärme von der Saugelektrode 10 abgeführt. Der Fluss der Elektronen 13 von der Elektronen-Emissionsschicht 15 zur Saugelektrode sorgt somit für einen Wärmetransport, welcher ohne mechanisch bewegliche Teile und damit verschleißfrei und geräuschlos, gleichzeitig jedoch mit hohem Wirkungsgrad und hoher Geschwindigkeit stattfindet. Über ein zwischen der Elektronen-Emissionsschicht 15 und der Saugelektrode 10 angeordnetes Gitter 12 oder ein Mehrfachgitter, an welches ein (gegenüber der Elektronen-Emissionsschicht 15) negatives Potenzial gelegt werden kann, lässt sich der Strom der Elektronen 13 bedarfsgerecht kontrollieren.

Die an der Anode 10 ankommende Wärme heizt diese auf. Diese Wärme wiederum kann über Strahlung zunächst die Kathode noch zusätzlich zu der ohnehin vorhandenen Verlustwärme aktivieren, sodass ein intensiverer Elektronenausstoß ausgelöst wird, der zur explosionsartigen Kühlung führen kann. Dieser Vorgang lässt sich über das Gitter 12 steuern, wenn eine entsprechende negative Vorspannung hieran den Elektronenfluss zur Reduzierung der Kühlleistung drosselt.

Man kann ferner die gestaute Wärme in elektrische Energie umwandeln. Dies kann zum Beispiel in Form von Szintillationen von Barium und einem Glasleiter geschehen, wobei das Licht zu einer Fotozelle geleitet wird, die es in elektrische Energie umwandelt. Diese elektrische Energie ist speicherfähig und kann zum Beispiel nutzbringend über Peltier-Elemente in Kälte umgewandelt werden.

Weitere Vorteile der erfindungsgemäßen Kühlung bestehen darin, dass sie keinen Einsatz umweltbelastender Stoffe erfordert, dass sie Kühlleistungen bis -80° C ermöglicht, dass sie für einen Betrieb mit Batterien geeignet ist, und dass man sie flexibel an verschiedene technische Gegebenheiten anpassen kann. Überschlagsrechnungen ergeben, dass eine erfindungsgemäße Kühlvorrichtung mit Kosten von ca. 0,98 Dollar pro Watt betrieben werden könnte. Die Kühlleistung liegt bei 4 Watt pro Quadratzentimeter und der Materialaufwand bei 0,3 Kilogramm pro Watt. Eine Geräuschentwicklung findet bei dem erfindungsgemäßen Kühlverfahren nicht statt. Die Kühlzelle ist den technischen Bedürfnissen anpassbar, das heißt es können mehrere Zellen zu einem Block vereint werden. Die Vorrichtung besitzt bei geringem Gewicht einen kompakten Aufbau. Die Genauigkeit der Temperaturregelung ist garantiert, und die gewünschte Kälteleistung kann schnell und ohne Trägheitseffekt erreicht werden.

Vorzugsweise befindet sich im Raum zwischen der Elektronen-Emissionsschicht 15 und der Saugelektrode 10 ein Vakuum. Zur Bereitstellung dieses Vakuums ist eine entsprechende Vakuumtechnik erforderlich.

Bei einer Weiterentwicklung der Erfindung kann der Austritt von Elektronen auch durch Licht unterstützt werden. Dazu müssten neben den Erdalkalimetallen auf photosensible Dotierungen in den Schichten eingebaut werden. Dann wären bereits Fotodioden in der Lage, den Leitungstransport von schnellen Elektronen in der Kühlvorrichtung auszulösen.

Weiterhin sind auch Folien in Verbundbauweise denkbar. Solche Folien würden eine uneingeschränkte Anpassung an zu kühlende Wärmeräume bedeuten. Der Vakuum-Spalt wäre mit Dickglaszellen in Kleinformat zu realisieren, welche die Leitdrähte eingeschweißt hätten.

Die Elektronen-Emissionsschicht 15 und/oder die Saugelektrode 10 ist mit einer strukturierten Oberfläche 14 dargestellt, deren dreidimensionale Formgebung zu einer erhöhten effektiven Oberfläche führt und damit zu einem verstärkten Austritt von Elektronen aus dem Inneren des Materials. Die Gestaltung struktureller Kathodenoberflächen kann insbesondere durch Bedampfungsmatrizen erfolgen.

In ähnlicher Weise ist die Oberfläche der Saugelektrode 10 mit einer Saugprofilierung 11 versehen. Diese Profilierung ist so zu wählen, dass sie die Absaugung der Elektronen von der Elektronen-Emissionsschicht 15 unterstützt.

Die Saugelektrode 10 nimmt die von den Elektronen 13 übertragene Wärme auf. Es ist daher für eine konventionelle Kühlung der Saugelektrode 10 zu sorgen. Dabei können insbesondere Energie-umwandelnde Elemente eingesetzt werden, welche die Wärmeenergie der Saugelektrode 10 vorzugsweise in nutzbare Energie wie zum Beispiel elektrische Energie umwandeln, so weit dies aufgrund der physikalischen Gesetzmäßigkeiten möglich ist.

Die thermisch aktive Schicht auf der Elektronen-Emissionsschicht enthält vorzugsweise Erdalkalielemente wie Barium oder Cäsium. Da die Erdalkalimetalle alle sehr aggressiv gegenüber Wasser und Sauerstoff reagieren, ist ein gewisser technischer Aufwand bei der Herstellung dieser Schichten erforderlich.

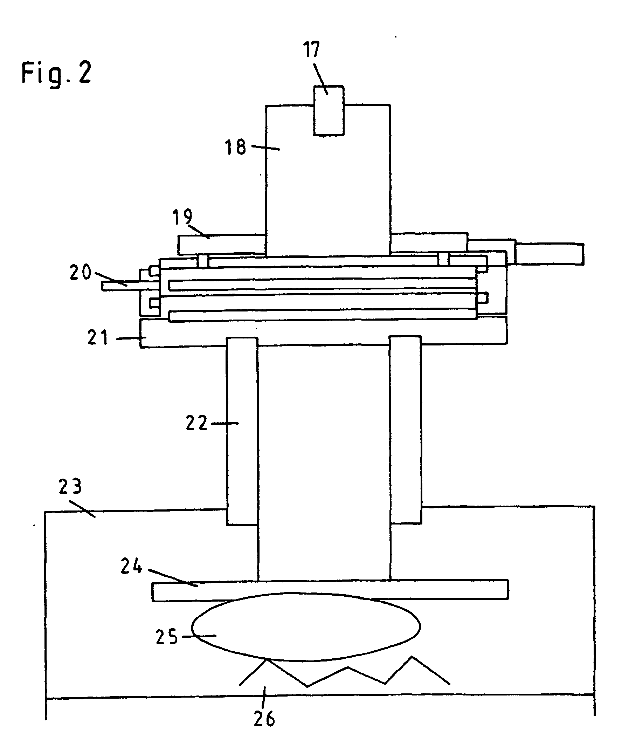

In Fig. 2 ist schematisch der Aufbau einer konkreten Kühlvorrichtung dargestellt. In einem Reaktionsraum 23 befindet sich eine Wärmequelle 26, welche ein Wärmefeld 25 erzeugt. Bei dem Reaktionsraum kann es sich insbesondere um einen Schaltschrank handeln. Die Abwärme wird zunächst von einer Wärmeauffangfläche 24 aufgenommen, welche als Elektronen-Emissionsschicht dient und Elektronen an die Saugelektrode abgibt. Letztere ist dabei über Wärmeleitkörper 22 und einen verschließbaren Vakuumstutzen 21 mit dem Reaktionsraum 23 verbunden. Der Vakuumraum wird ferner durch eine Gummidichtung 20 abgedichtet. Am Kopf der Vorrichtung befindet sich das Hochspannungsteil 19 sowie ein Anschlussblock 18, der in einen Lichtleiter 17 überführt. Der Lichtleiter führt zu einer Fotozelle, die elektrischen Strom für Peltier-Elemente zur zusätzlichen Kühlung zur Verfügung stellt.

Typische Elemente für den Bau einer derartigen Kältezelle sind: elektrische Spannungsquelle 6 V; Verdrahtung, Potentiometer und zwei Schalter (Spannungsschalter, Schalter für Gittersteuerung); Elektroden; Beschichtungen; Wärmeableitbleche für die Anode; Isolation der eigentlichen Kühlzelle; adaptive Anschlüsse an die kathodische Seite für den eigentlichen Kühlraum; Umwandlungseinheit des anodischen Stroms für Speicherzwecke beziehungsweise für Umwandlungen elektrischer Energie in Kälte; Reglerkreis für Steuerelektrode; optische Sichteinheit für Kühlaktivität; Temperaturmessung.

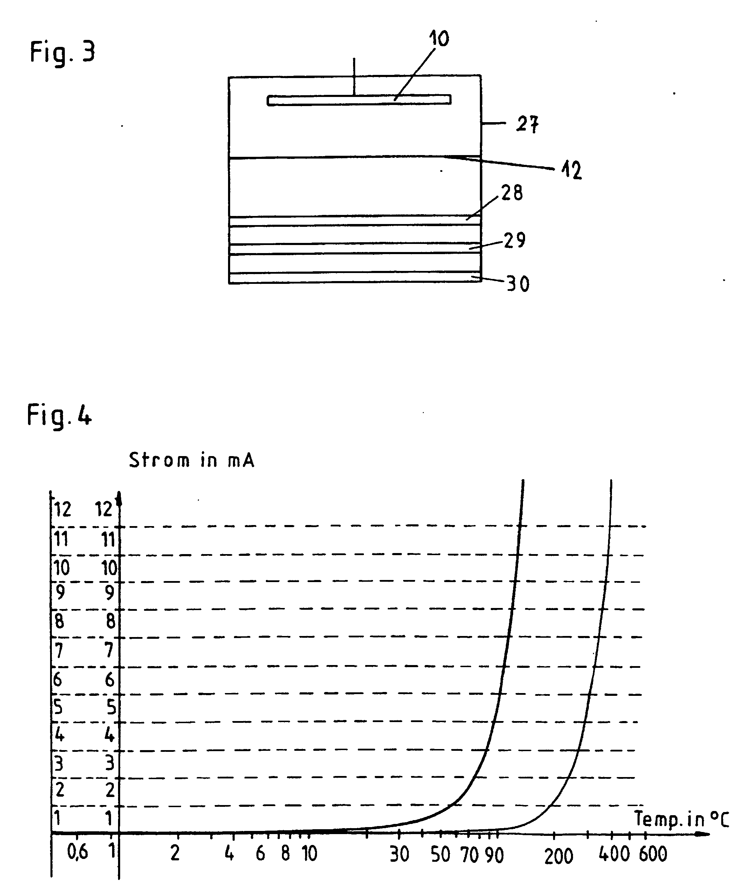

In Fig. 3 ist ein möglicher Schichtaufbau dargestellt, bei welchem verschiedene wärmeaktive Schichten als Sandwich-Kombinationen angeordnet sind, die über große Temperaturbereiche aktiv sein können. Innerhalb der Zellenwandung 27 befindet sich die Saugelektrode 10 als Anode sowie das Steuergitter 12. Weiterhin sind als Elektronen-Emissionsschicht eine Cs-Elektrode 28 und eine Ba-Elektrode 29 vorhanden. Der Wärmeboden der Anordnung ist mit 30 bezeichnet. Die Beschichtung 29 kann für die normale Kühlstufe benutzt werden, also für Temperaturen von 120° C bis Raumtemperatur. Die zweite Beschichtung 28 würde dann für eine weitere Erniedrigung der Temperaturen mittels Elektronen-Emissionen des Cäsiums zur Verfügung stehen.

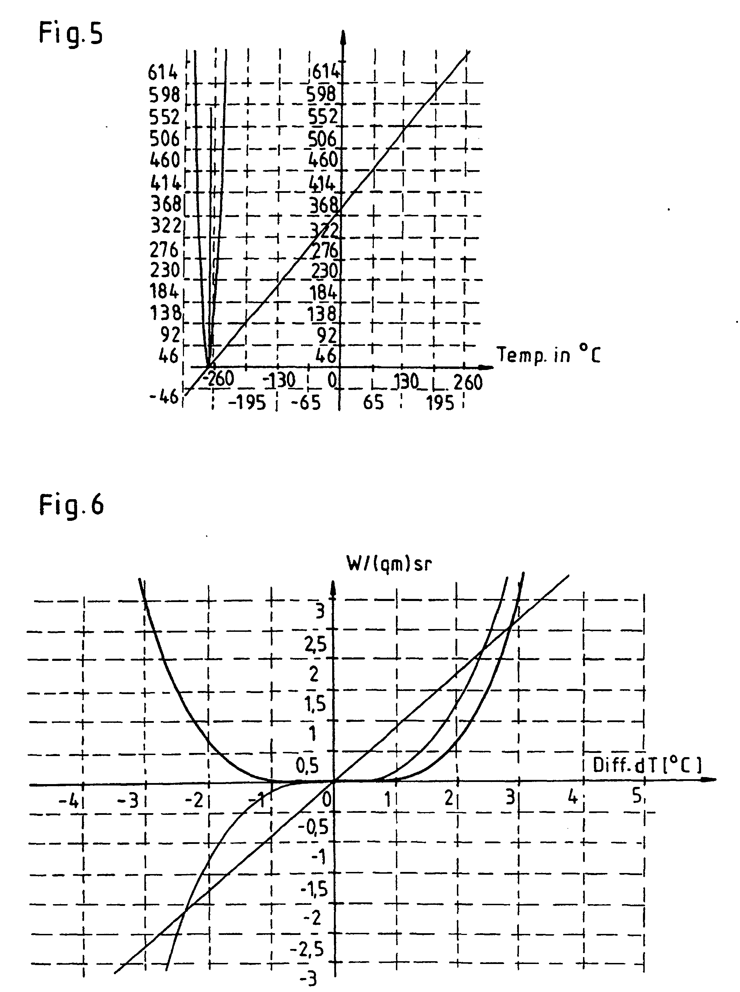

Im Folgenden wird die Kühlleistung des erfindungsgemäßen Kühlsystems mit Hilfe der Figuren 4 bis 6 erläutert.

Fig. 4 zeigt den Kühlstrom des Kühlsystems mit einer Elektronen-Emissionsschicht aus Barium auf Wolfram in Abhängigkeit von der Verlusttemperatur Tᵥ (horizontale Achse). Wie man deutlich erkennt, steigt der Kühlstrom (in mA, vertikale Achse) mit dem Quadrat der Temperatur, d. h., dass sich mit zunehmender Erwärmung die Kühlung selbst aktiviert. Die linke Kurve zeigt die relative Kühlgeschwindigkeit in der Zeiteinheit in Abhängigkeit von der Temperaturhöhe und verläuft oberhalb von 60° C sehr stark ansteigend.

Fig. 5 enthält eine ähnliche Darstellung für eine Aktivschicht von Cäsium auf Wolfram. Die geradlinig verlaufende Kühlkurve zeigt deutlich, dass weite Bereiche im negativen Temperaturniveau erfasst werden. Dies bedeutet, dass auch bei Minustemperaturen gekühlt werden kann. Die andere Kurve zeigt die Kühlleistung pro Temperaturwert. Bei Cäsium auf Wolfram steigt diese mit einem Anstiegsfaktor größer als 1, was aussagt, dass mit steigender Temperatur die Kühlung exponentiell ansteigt. Im Vergleich zu Ba auf W (Fig. 4) ist die Kühlleistung um drei Größenordnungen sensibler und damit leistungsstärker.

Die Kühlung kann abgeschaltet werden, wenn die Saugspannung an der Anode auf Null gefahren wird oder wenn die negative Gittervorspannung so hoch ist, dass der Durchgriff der Anode nicht mehr stattfindet. Wenn das Potenzial am Steuergitter auf Null gefahren wird, steigen die Wärmetransporte der Elektronen stark an, und es wird ein starker Kühleffekt ausgelöst. Da dies zur Vereisung führen kann, sollte die Regelung immer von einstellbaren elektronischen Grenzwerten der Temperaturführung ausgehen.

In Fig. 6 ist die Wirkung der Regelung auf die Kühlströme der freien Elektronen von Cs und ihre mitgenommene Energie dargestellt. Die Emissionszahl ε wurde mit dem Wert von Gold angesetzt, da Cs ein ähnliches Aussehen besitzt. Zu erkennen ist, dass die Strahlungsenergie (vertikale Achse, Einheit W/m²sr) mit der Temperatur (horizontale Achse) parabelförmig steigt. Die Energieübertragung verläuft somit potenziell mit zunehmender Temperatur, wobei die spektrale Abstrahlung pro Temperatureinheit annähernd dem Energietransport der Elektronen proportional ist (Kurve der ersten Ableitung). Die Änderung der kathodenseitigen spektralen Kühlung ist pro Temperaturwert um so größer, je höher die aufzunehmende Energie ist (Kurve der zweiten Ableitung).

Es ist dem Emissionsvorgang dienlich, wenn eine große Oberfläche für die frei werdenden Elektronen zur Verfügung gestellt wird. Der Kühleffekt potenziert sich mit der Oberflächenvergrößerung. Hierbei kann man die Strukturierung derart gestalten, dass Spitzen- und Kurvengebilde von 1 bis 2 µm Höhe Kanten produzieren, wodurch sich die Austrittsarbeit um einige Größenordnungen verringert. Bei der Verwendung von Wolfram als polarisierender Unterlage zur Aktivschicht benötigt man ca. 0,3 eV, wobei die Verwendung von Barium allein 2,52 eV zur Elektronen-Emission erfordert. Bei Verwendung von Cs allein benötigt man 1,94 eV, in Verbindung mit dem Untergrund Wolfram nur 0,001 eV.

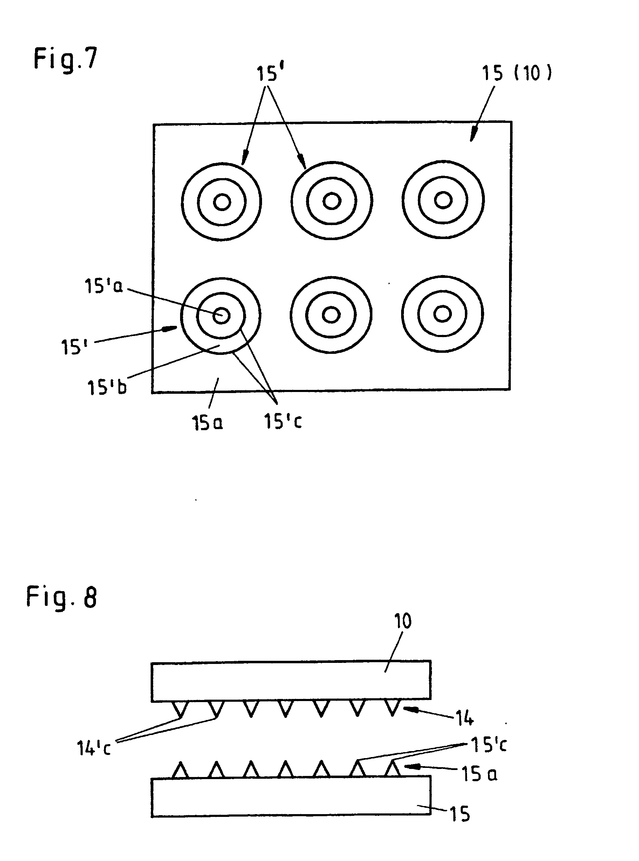

Die Oberfläche der Elektronen-Emissionsschicht 15 weist zur Oberflächenvergrößerung und zur Erleichterung eines Elektronenaustritts aus der Elektronen-Emissionsschicht eine Oberflächenprofilierung auf. Diese Oberflächenprofilierung der Elektronen-Emissionsschicht 15 besteht dabei aus erhaben ausgebildeten, spitzenförmigen Vorsprüngen oder aus kraterförmigen Profilen 15' mit ringförmigen Erhebungen 15'a und ringförmigen Vertiefungen 15'b, wobei an den kantenbildenden Übergängen zwischen den ringförmigen Erhöhungen 15'a und den ringförmigen Vertiefungen 15'b Kanteneffekte derart hervorgerufen werden, daß an den Kanten 15'c eine erhöhte Elektrodenemission erhalten wird (Fig. 7). Auch kann die Oberflächenprofilierung aus erhaben auf der Oberfläche der Elektronen-Emissionsschicht 15 ausgebildeten Spitzen von pyramidenförmigen Formkörpern bestehen. Mit Hilfe der aus Spitzen erstellten Oberfläche werden ebenfalls Kanteneffekte hervorgerufen, die die Elektonenaustrittsenergie um weitere zwei Ordnungen von eV reduziert. Die ausgebildeten Oberflächenstrukturen können auch mit einem dünnen Film aus einer entsprechend geeigneten metallischen Komponente überzogen sein.

So wie auch die Elektronen-Emissionsschicht 15 mit einer Oberflächenprofilierung versehen sein kann, so kann auch die Oberfläche der Saugelektrode 10 entsprechend mit einer Oberflächenprofilierung versehen sein (Fig. 8). Die Saugelektrode 10 weist ähnliche Oberflächenstrukturen wie die Elektronen-Emissionsschicht 15 auf. Der Saugelektrodenkörper kann zur Ausbildung einer Struktur auch entsprechend beschichtet sein; wesentlich ist, dass eine Kantenausbildung geschaffen wird, um eine erhöhte Elektrodenemission zu erreichen. Die Elektronen-Emissionsschicht und die Saugelektrode 10 weisen dabei gleiche Oberflächenstrukturen auf, die an den sich gegenüberliegenden Oberflächen ausgebildet sind (Fig. 8). Die Saugelektrode 10 als Anode sollte dabei eine spezielle Saugkantenausgestaltung aufweisen, um den intensiven Elektronenaustritt aus der heißen Kathode (Elektronen-Emissionsschicht) zu ermöglichen und den kürzesten Weg von der Kathode zur Anode zu ermöglichen. Die Strukturoberfläche der Saugelektrode 10 ist in Fig. 8 mit 14 bezeichnet und die Katenausbildung mit 14'c. Dem steht eine gleiche Oberflächenstruktur 15a der Elektronen-Emissionsschicht 15 gegenüber, deren Kanten mit 15'c in Fig. 8 bezeichnet sind.

### Bezugszeichen:

- 100: Kühlvorrichtung
- 10: Saugelektrode (Anode)
- 11: Saugprofilierung
- 12: Steuergitter
- 13: Elektronen
- 14: Strukturoberfläche
- 14': Kanten
- 15: Elektronen-Emissionsschicht (Kathode)
- 15': Kraterförmige Profile
- 15'a: Ringförmige Erhebungen
- 15'b: Ringförmige Vertiefungen
- 15'c: Kanten
- 15a: Strukturoberfläche
- 16: Batterie
- 17: Lichtleiter
- 18: Anschlussblock
- 19: Hochspannungsteil
- 20: Gummidichtung
- 21: Vakuumstutzen
- 22: Wärmeleitkörper
- 23: Reaktionsraum
- 24: Wärmeauffangfläche
- 25: Wärmefeld
- 26: Wärmequelle
- 27: Zellenwandung
- 28: Cs-Elektrode
- 29: Ba-Elektrode
- 30: Wärmeboden

## Patentansprüche

1. Kühlvorrichtung (100), enthaltend eine an dem zu kühlenden Gegenstand anzubringende Elektronen-Emissionsschicht (15), eine im Abstand zur Elektronen-Emissionsschicht angeordnete Saugelektrode (10) sowie eine Spannungsquelle (16), deren negativer Pol mit der Elektronen-Emissionsschicht (15) und deren positiver Pol mit der Saugelektrode (10) verbunden ist,
**dadurch gekennzeichnet,**
**dass** zwischen der Elektronen-Emissionsschicht (15) und der Saugelektrode (10) mindestens ein Gitter (12) angeordnet ist, welches mit einer vorzugsweise regelbaren Spannungsquelle verbunden ist

2. Kühlvorrichtung nach Anspruch 1,
**dadurch gekennzeichnet,**
**dass** die Oberfläche der Elektronen-Emissionsschicht (15) Elektride oder ein Erdatkalimetall, vorzugsweise Cäsium oder Barium, enthält.

3. Kühlvorrichtung nach Anspruch 2,
**dadurch gekennzeichnet,**
**dass** die Oberfläche der Elektronen-Emissionsschicht (15) auf einer Schicht, welche Wolfram enthält, angeordnet ist.

4. Kühlvorrichtung nach einem der Ansprüche 1 bis 3,
**dadurch gekennzeichnet,**
**dass** die Oberfläche der Elektronen-Emissionsschicht (15) zur Oberflächenvergrößerung und zur Erleichterung eines Elektrodenaustritts aus der Elektronen-Emissionsschicht (15) eine Oberflächenprofilierung aufweist.

5. Kühlvorrichtung nach Anspruch 4,
**dadurch gekennzeichnet,**
**dass** die Oberfläche der Elektronen-Emissionsschicht (15) eine dreidimensionale Struktur (14) aufweist, vorzugsweise durch Ausbildung von Vertiefungen und/oder Erhöhungen.

6. Kühlvorrichtung nach einem der Ansprüche 4 oder 5,
**dadurch gekennzeichnet,**
**dass** die Oberflächenprofilierung der Elektronen-Emissionsschicht (15) aus erhaben ausgebildeten, spitzenförmigen Vorsprüngen oder aus kraterförmigen Profilen (15') mit ringförmigen Erhebungen (15'a) und ringförmigen Vertiefungen (15'b) besteht, wobei an den Kanten (15'c) bildenden Übergängen zwischen den ringförmigen Erhöhungen (15'a) und den ringförmigen Vertiefungen (15'b) Kanteneffekte derart hervorgerufen werden, daß an den Kanten (15'c) eine erhöhte Elektrondenemission erhalten wird.

7. Kühlvorrichtung nach einem der Ansprüche 1 bis 6,
**dadurch gekennzeichnet,**
**dass** zwischen der Elektronen-Emissionsschicht (15) und der Saugelektrode (10) ein Vakuum vorliegt.

8. Kühlvorrichtung nach einem der Ansprüche 1 bis 7,
**dadurch gekennzeichnet,**
**dass** sie eine Einrichtung zur Erzeugung eines Magnetfeldes im Bereich der Oberfläche der Elektronen-Emissionsschicht (15) aufweist.

9. Kühlvorrichtung nach einem der Ansprüche 1 bis 8,
**dadurch gekennzeichnet,**
**dass** die Elektronen-Emissionsschicht (15) radioaktive Elemente, die einem β-Zerfall unterliegen, enthält.

10. Kühlvorrichtung nach einem der Ansprüche 1 bis 9,
**dadurch gekennzeichnet,**
**dass** die Elektronen-Emissionsschicht (15) als Dünnschichtfolie auf einem hochleitenden Material, vorzugsweise auf Gold, ausgebildet ist.

11. Kühlvorrichtung nach einem der Ansprüche 1 bis 10,
**dadurch gekennzeichnet,**
**dass** die Saugelektrode (10) entsprechend der Elektronen-Emissionsschicht (15) eine Oberflächenprofilierung zur Oberflächenvergrößerung und zur Erleichterung eines Elektronenaustritts aus der Elektronen-Emissionsschicht (15) aufweist.

12. Kühlvorrichtung nach Anspruch 11,
**dadurch gekennzeichnet,**
**dass** die Saugelektrode (10) Vorsprünge (11) aufweist, die einen Elektronenaustritt aus der Elektronen-Emissionsschicht (15) erleichtern.

13. Verfahren zur Kühlung eines Gegenstandes, wobei auf dem Gegenstand eine Elektronen-Emissionsschicht (15) und mit Abstand zur Elektronen-Emissionsschicht eine Saugelektrode (10) angeordnet wird, wobei die Elektronen-Emissionsschicht (15) gegenüber der Saugelektrode (10) auf ein negatives elektrisches Potenzial gelegt wird,
**dadurch gekennzeichnet,**
**dass** zwischen der Elektronen-Emissionsschicht (15) und der Saugelektrode (10) ein Gitter (12) angeordnet wird und dass der Fluss der Elektronen (13) von der Elektronen-Emissionsschicht zur Saugelektrode durch ein an das Gitter angelegtes elektrisches Potenzial kontrolliert wird.

14. Kühlsystem enthaltend eine Sekundärkühlung, insbesondere in Form einer Konvektionskühlung,
**dadurch gekennzeichnet,**
**dass** es eine am zu kühlenden Gegenstand anzubringende Kühlvorrichtung (100) nach einem der Ansprüche 1 bis 12 enthält, deren Saugelektrode (10) von der Sekundärkühlung gekühlt wird.

## Claims

1. Cooling device (100) containing an electron emission layer (15) to be applied on the object to be cooled, a suction electrode (10) placed at a distance from the electron emission layer as well as a supply source (16), the negative pole of which is connected with the electron emission layer (15) and the positive pole with the suction electrode (10),
**characterized in**
**that** at least one grid (12), which is connected with a preferable adjustable supply source, is placed between the electron emission layer (15) and the suction electrode (10).

2. Cooling device according to claim 1,
**characterized in**
**that** the surface of the electron emission layer (15) contains electrides or an alkaline earth metal, preferably cesium or barium.

3. Cooling device according to claim 2,
**characterized in**
**that** the surface of the electron emission layer (15) is placed on a layer which contains tungstene.

4. Cooling device according to any of the claims 1 to 3,
**characterized in**
**that** the surface of the electron emission layer (15) has a surface profiling for increasing the surface and for facilitating the electron emission from the electron emission layer (15).

5. Cooling device according to claim 4,
**characterized in**
**that** the surface of the electron emission layer (15) has a three-dimensional structure (14), preferably by formation of recesses and/or prominences.

6. Cooling device according to any of the claims 4 or 5,
**characterized in**
**that** the surface profiling of the electron emission layer (15) consists of raised configured pointed projections or of crater shaped profiles (15') with annular prominences (15'a) and annular recesses (15'b), whereby edge effects are caused at the edges (15'c) constituting transitions between the annular prominences (15'a) and the annular recesses (15'b) in such a way that an increased electron emission is obtained on the edges (15'c).

7. Cooling device according to any of the claims 1 to 6,
**characterized in**
**that** there is a vacuum between the electron emission layer (15) and the suction electrode (10).

8. Cooling device according to any of the claims 1 to 7,
**characterized in**
**that** it has a device for producing a magnetic field in the area of the surface of the electron emission layer (15).

9. Cooling device according to any of the claims 1 to 8,
**characterized in**
**that** the electron emission layer (15) contains radioactive elements which are submitted to a beta decay.

10. Cooling device according to any of the claims 1 to 9,
**characterized in**
**that** the electron emission layer (15) is configured as a thin layer film on a highly conductive material, preferably on gold.

11. Cooling device according to any of the claims 1 to 10,
**characterized in**
**that** the suction electrode (10) in accordance with the electron emission layer (15) has a surface profiling for increasing the surface and for facilitating an electron emission from the electron emission layer (15).

12. Cooling device according to claim 11,
**characterized in**
**that** the suction electrode (10) has projections (11) which facilitate an electron emission from the electron emission layer (15).

13. Method for cooling an object, whereby an electron emission layer (15) is placed on the object and a suction electrode (10) is placed at a distance from the electron emission layer, whereby the electron emission layer (15) is applied to a negative electrical potential with respect to the suction electrode (10),
**characterized in**
**that** a grid (12) is placed between the electron emission layer (15) and the suction electrode (10) and that the flow of the electrons (13) from the electron emission layer to the suction electrode is controlled by an electrical potential applied to the grid.

14. Cooling system containing a secondary cooling, in particular in form of a convection cooling,
**characterized in**
**that** it contains a cooling device (100) according to any of the claims 1 to 12 to be applied on an object to be cooled, device the suction electrode (10) of which is cooled by the secondary cooling.

## Revendications

1. Dispositif de refroidissement (100) contenant une couche d'émission d'électrons (15) devant être appliquée sur un objet à refroidir, une électrode d'aspiration (10) placée espacée de la couche d'émission d'électrons ainsi qu'une source de tension (16) dont le pôle négatif est relié à la couche d'émission d'électrons (15) et dont le pôle positif est relié à l'électrode d'aspiration (10),
**caractérisé en ce**
**qu'**au moins une grille (12), qui est reliée à une source de tension de préférence réglable, est placée entre la couche d'émission d'électrons (15) et l'électrode d'aspiration (10).

2. Dispositif de refroidissement selon la revendication 1,
**caractérisé en ce**
**que** la surface de la couche d'émission d'électrons (15) contient des électrides ou un métal alcalinoterreux, de préférence du césium ou du barium.

3. Dispositif de refroidissement selon la revendication 2,
**caractérisé en ce**
**que** la surface de la couche d'émission d'électrons (15) est placée sur une couche qui contient du tungstène.

4. Dispositif de refroidissement selon l'une des revendications 1 à 3,
**caractérisé en ce**
**que** la surface de la couche d'émission d'électrons (15) présente un profilage de surface pour augmenter la surface et pour faciliter une sortie d'électrons de la couche d'émission d'électrons (15).

5. Dispositif de refroidissement selon la revendication 4,
**caractérisé en ce**
**que** la surface de la couche d'émission d'électrons (15) présente une structure tridimensionnelle (14), de préférence par la formation de creux et/ou de bosses.

6. Dispositif de refroidissement selon l'une des revendications 4 ou 5,
**caractérisé en ce**
**que** le profilage de surface de la couche d'émission d'électrons (15) est constitué par des saillies en forme de pointes configurées en relief ou de profilés en forme de cratères (15') avec des bosses annulaires (15'a) et des creux annulaires (15'b), des effets d'arêtes étant causés sur les transitions qui forment des bords 815'c) entre les bosses annulaires (15'a) et les creux annulaires (15'b) de telle manière qu'une émission accrue d'électrons est obtenue sur les arêtes (15'c).

7. Dispositif de refroidissement selon l'une des revendications 1 à 6,
**caractérisé en ce**
**qu'**il y a un vide entre la couche d'émission d'électrons (15) et l'électrode d'aspiration (10).

8. Dispositif de refroidissement selon l'une des revendications 1 à 7,
**caractérisé en ce**
**qu'**il présente un dispositif pour produire un champ magnétique dans la zone de la surface de la couche d'émission d'électrons (15).

9. Dispositif de refroidissement selon l'une des revendications 1 à 8,
**caractérisé en ce**
**que** la couche d'émission d'électrons (15) contient des éléments radioactifs qui sont soumis à une désintégration β.

10. Dispositif de refroidissement selon l'une des revendications 1 à 9,
**caractérisé en ce**
**que** la couche d'émission d'électrons (15) est configurée comme une feuille à couche mince sur un matériau très conducteur, de préférence sur de l'or.

11. Dispositif de refroidissement selon l'une des revendications 1 à 10,
**caractérisé en ce**
**que** l'électrode d'aspiration (10) présente, de manière correspondante à la couche d'émission d'électrons (15), un profilage de surface pour augmenter la surface et pour faciliter une sortie d'électrons de la couche d'émission d'électrons (15).

12. Dispositif de refroidissement selon la revendication 11,
**caractérisé en ce**
**que** l'électrode d'aspiration (10) présente des saillies (11) qui facilitent une sortie d'électrons de la couche d'émission d'électrons (15).

13. Procédé pour refroidir un objet, une couche d'émission d'électrons (15) étant placée sur l'objet et une électrode d'aspiration (10) étant placée espacée de la couche d'émission d'électrons (15), la couche d'émission d'électrons (15) étant appliquée sur un potentiel électrique négatif par rapport à l'électrode d'aspiration (10),
**caractérisé en ce**
**qu'**une grille (12) est placée entre la couche d'émission d'électrons (15) et l'électrode d'aspiration (10) et que le flux des électrons (13) de la couche d'émission d'électrons (15) et l'électrode d'aspiration (10) est contrôlé par un potentiel électrique appliqué à la grille.

14. Système de refroidissement contenant un refroidissement secondaire, en particulier sous forme de refroidissement par convection,
**caractérisé en ce**
**qu'**il contient un dispositif de refroidissement (100) selon l'une des revendications 1 à 12 à appliquer sur un objet à refroidir, dispositif dont l'électrode d'aspiration est refroidie par le refroidissement secondaire.
